# EUROPÄISCHE PATENTSCHRIFT

(11) **EP 4 348 056 B1**
(45) Veröffentlichungstag und Bekanntmachung des Hinweises auf die Patenterteilung: **18.12.2024**
(21) Anmeldenummer: 22726059.3
(22) Anmeldetag: 27.04.2022
(51) Int. Cl.: F04D 23/00, F04D 25/04, F04D 25/06, H01M 8/04082, H01M 8/04089, F04D 29/58

(54) **FÖRDEREINRICHTUNG FÜR EIN BRENNSTOFFZELLEN-SYSTEM ZUR FÖRDERUNG UND/ODER REZIRKULATION EINES GASFÖRMIGEN MEDIUMS, INSBESONDERE WASSERSTOFF**
CONVEYING DEVICE FOR A FUEL CELL SYSTEM FOR CONVEYING AND/OR RECIRCULATING A GASEOUS MEDIUM, IN PARTICULAR HYDROGEN
DISPOSITIF D'ACHEMINEMENT POUR SYSTÈME DE PILE À COMBUSTIBLE, SERVANT À ACHEMINER ET/OU À RECYCLER UN MILIEU GAZEUX, EN PARTICULIER DE L'HYDROGÈNE

(30) Priorität: 04.06.2021 DE 102021205685
(43) Veröffentlichungstag der Anmeldung: 10.04.2024
(73) Patentinhaber: Robert Bosch GmbH, 70442 Stuttgart (DE)
(72) Erfinder: LEIBSSLE, Benedikt, 70569 Stuttgart (DE); WESSNER, Jochen, 73728 Esslingen (DE); KATZ, Martin, 70469 Stuttgart (DE)
(86) Internationale Anmeldenummer: PCT/EP2022/061235
(87) Internationale Veröffentlichungsnummer: WO 2022/253496

(56) Entgegenhaltungen:
- EP-A1- 0 070 530
- EP-A1- 2 538 480
- DE-A1- 102010 035 860
- DE-A1- 102019 215 473
- DE-A1- 102021 200 245
- GB-A- 2 260 368

## Beschreibung

### Stand der Technik

Die vorliegende Erfindung betrifft eine Fördereinrichtung für ein Brennstoffzellen-System zur Förderung und/oder Rezirkulation eines gasförmigen Mediums, insbesondere Wasserstoff, das insbesondere zur Anwendung in Fahrzeugen mit einem Brennstoffzellenantrieb vorgesehen ist.

Im Fahrzeugbereich spielen neben flüssigen Kraftstoffen in Zukunft auch gasförmige Kraftstoffe eine zunehmende Rolle. Insbesondere bei Fahrzeugen mit Brennstoffzellenantrieb müssen Wasserstoffgasströme gesteuert werden. Die Gasströme werden hierbei nicht mehr diskontinuierlich, wie bei der Einspritzung von flüssigem Kraftstoff gesteuert, sondern es wird das Gas aus mindestens einem Hochdrucktank entnommen und über eine Zuströmleitung eines Mitteldruckleitungssystem an die Fördereinrichtung geleitet. Diese Fördereinrichtung führt das Gas über eine Verbindungsleitung eines Niederdruckleitungssystems zu einer Brennstoffzelle.

Aus der DE 10 2017 222 390 A1 ist eine Fördereinrichtung für ein Brennstoffzellen-System zur Förderung und/oder Rezirkulation eines gasförmigen Mediums bekannt, insbesondere Wasserstoff, mit einem Seitenkanalverdichter, mit einer von einem Treibstrahl eines unter Druck stehenden gasförmigen Mediums angetriebenen Strahlpumpe und mit einem Dosierventil. Dabei wird das unter Druck stehende gasförmige Medium der Strahlpumpe mittels des Dosierventils zugeführt wird, wobei ein Anodenausgang einer Brennstoffzelle mit einem Eingang der Fördereinrichtung fluidisch verbunden ist und wobei ein Ausgang der Fördereinrichtung mit einem Anodeneingang der Brennstoffzelle fluidisch verbunden ist,

Die aus der DE 10 2017 222 390 A1 bekannten Fördereinrichtung bekannte Brennstoffzellen-System kann jeweils gewisse Nachteile aufweisen. Dabei sind die Komponenten der Fördereinrichtung, insbesondere der Seitenkanalverdichter, ein HGI und die Strahlpumpe zumindest teilweise mittels fluidischer Verbindungen in Form von Rohrleitungen und gegebenenfalls einer zusätzlichen Verteilerplatte mit innenliegenden Kanälen miteinander und/oder mit der Brennstoffzelle und/oder mit weiteren Komponenten der Fördereinrichtung verbunden. Dabei liegen die Komponenten zumindest teilweise als separate Baugruppen vor, die mittels Rohrleitungen miteinander verbunden sind. Dabei entstehen zum einen viele Strömungsumlenkungen und somit Strömungsverluste. Dadurch wird der Wirkungsgrad der Fördereinrichtung reduziert.

Zum anderen entsteht durch das Anordnen der Komponenten Dosierventil und/oder Strahlpumpe und/oder Seitenkanalverdichter als separate Baugruppen der Nachteil, dass diese insgesamt eine große Oberfläche im Bezug zum Bauraum und/oder geometrischen Volumen ausbilden. Dadurch wird ein schnelles Auskühlen begünstigt, insbesondere bei langen Standzeiten des Gesamtfahrzeugs, was zu einer erhöhten Bildung von Eisbrücken und somit einer erhöhten Schädigung der Bauteile und/oder eines Brennstoffzellen-Systems führen kann, was wiederum zu einer verringerten Zuverlässigkeit und/oder Lebensdauer der Fördereinrichtung und/oder des Brennstoffzellen-Systems führen kann. Ein weiterer Nachteil ist zudem eine schlechte Kaltstarteigenschaft der Bauteile Dosierventil und/oder Strahlpumpe und/oder Seitenkanalverdichter und/oder des Brennstoffzellen-Systems und/oder des Gesamtfahrzeugs, da Heizenergie und/oder Wärmeenergie jeweils einzeln in die Bauteile Seitenkanalverdichter und/oder Strahlpumpe und/oder Dosierventil eingebracht werden muss, wobei die Bauteile voneinander entfernt angeordnet sind und somit jedes Bauteil separat aufgeheizt werden muss, insbesondere bei Temperaturen unter 0° Celsius, um mögliche Eisbrücken zu eliminieren.

Des Weiteren muss für die Komponenten Seitenkanalverdichter, Strahlpumpe und Dosierventil jeweils ein eigenes Gehäuse vorgesehen werden, was zu hohen Herstellkosten und/oder Materialkosten führt.

DE 10 2010 035860 A1, GB 2 260 368 A und EP 2 538 480 A1 offenbaren ebenfalls eine Fördereinrichtung mit einem Seitenkanalverdichter, wobei die Fördereinrichtung mittels eines Dosierventils mit einem Treibstrahl eines unter Druck stehenden gasförmigen Mediums zumindest teilweise angetrieben wird.

### Offenbarung der Erfindung

### Vorteile der Erfindung

Erfindungsgemäß wird eine Fördereinrichtung für ein Brennstoffzellen-System vorgeschlagen, zur Förderung und/oder Rezirkulation eines gasförmigen Mediums, insbesondere Wasserstoff, wobei der Wasserstoff im Folgenden als H₂ bezeichnet wird. Dabei weist die Fördereinrichtung einen Seitenkanalverdichter auf, wobei die Fördereinrichtung mittels eines Dosierventils mit einem Treibstrahl eines unter Druck stehenden gasförmigen Mediums zumindest teilweise angetrieben wird, wobei das unter Druck stehendegasförmige Medium einem Verdichterraum des Seitenkanalverdichters zumindest mittelbar mittels des Dosierventils zugeführt wird. Dabei weist der Seitenkanalverdichter ein Gehäuse auf, mit dem in dem Gehäuse befindlichen Verdichterraum, der einen umlaufenden ersten Seitenkanal aufweist und mit einem in dem Gehäuse befindlichen Laufrad das drehbar um eine Drehachse angeordnet ist und durch einen Antrieb angetrieben wird. Des Weiteren weist das Gehäuse, insbesondere im Bereich des ersten Seitenkanals, eine Gas-Einlassöffnung und eine Gas-Auslassöffnung auf, die über den Verdichterraum fluidisch miteinander verbunden sind. Bei dem gasförmigen Medium kann es sich dabei insbesondere um ein Treibmedium handeln, welches aus einem Tank kommt.

Bezugnehmend auf Anspruch 1 ist die Fördereinrichtung derart ausgebildet, dass die Zuführung des gasförmigen Mediums mittels des Dosierventils zum Seitenkanalverdichter über das Laufrad erfolgt, wobei die Zuführung zumindest nahezu in Richtung der Drehachse auf der dem Antrieb abgewandten Seite des Laufrads erfolgt. Auf diese Weise lässt sich der Vorteil erzielen, dass eine kompakte Bauform der Fördereinrichtung herbeigeführt werden kann, da der Antrieb auf der gegenüberliegenden Seite des Laufrads vom Dosierventil in Richtung der Drehachse angeordnet ist. Zudem können die Bauteilkosten und/oder die Montagekosten des Seitenkanalverdichters reduziert werden, da die Zuführung des gasförmigen Mediums mittels des Dosierventils nicht von der Seite des Antriebs erfolgen muss, was zu einer höheren Komplexität der Bauteile und/oder der Komponenten, beispielsweise mittels einer Hohlwelle, die zum Übertragen eines Drehmoments vom Antrieb auf das Laufrad und zur Durchführen und Zuführen des gasförmigen Mediums zum Seitenkanalverdichter erfolgt. Dies führt zu einer Kosteneinsparung der gesamten Fördereinrichtung. Zudem können auf diese Weise die Strömungspfade zwischen dem Dosierventil und dem Seitenkanalverdichter verkürzt werden, was zu einer Verringerung der Strömungsverluste des gasförmigen Mediums und somit zu einem erhöhten Wirkungsgrad des gesamten Förderaggregats führt.

Durch die in den Unteransprüchen aufgeführten Maßnahmen sind vorteilhafte Weiterbildungen der im Anspruch 1 angegebenen Fördereinrichtung möglich. Die Unteransprüche betreffen bevorzugte Weiterbildungen der Erfindung.

Gemäß einer vorteilhaften Ausgestaltung der Fördereinrichtung erfolgt die Zuführung des gasförmigen Mediums vom Dosierventil in den Bereich einer axiale Öffnung des Laufrads, wobei die axiale Öffnung insbesondere scheibenförmig umlaufend um die Drehachse verläuft. Auf diese Weise kann das gasförmige Medium direkt vom Dosierventil in das Laufrad eingebracht werden, ohne das weitere Bauteile beispielsweise in Form von Rohrleitungen notwendig sind. Dies führt zu reduzierten Materialkosten und Montagekosten der Fördereinrichtung reduziert werden. Zudem ist keine Dichtung notwendig, beispielsweise für ein Rohrleitungssystem und/oder eine mechanische Schnittstelle zwischen dem Dosierventil, so dass eine verschleißarme und reibungsfreie Möglichkeit der Zuführung des gasförmigen Mediums zum Laufrad bzw. Seitenkanalverdichter erfolgen kann. Dies bietet den Vorteil einer erhöhten Lebensdauer des Förderaggregats aufgrund eines reduzierten Reibverschleißes.

Gemäß einer besonders vorteilhaften Ausgestaltung der Fördereinrichtung bildet das Laufrad an seiner der Drehachse abgewandten Seite eine Wandung aus, wobei das Laufrad mindestens eine radiale Öffnung an seiner innenliegenden Wandung aufweist, über die das Laufrad mittels eines Treibmediums bzw. des Treibstrahls angetrieben wird, insbesondere im Bereich eines zweiten Seitenkanals. Auf diese Weise kann der Wirkungsgrad des Förderaggregats verbessert werden, da ein effizientes Antreiben des Laufrads über das Treibmedium bzw. den Treibstrahl, welches aus der radialen Öffnung des Laufrads ausströmt und somit das Laufrad in einer Drehrichtung antreibt. Dabei strömt das, insbesondere unter hohem Druck stehende und mit einer hohen Geschwindigkeit aus der radialen Öffnung strömende, Treibmedium in den Bereich des zweiten Seitenkanals. Dabei wird das Laufrad mittels eines Rückstoßantriebs in eine Rotationsbewegung versetzt, wobei der Rückstoß insbesondere durch das aus der mindestens einen radialen Öffnung in den zweiten Seitenkanal strömenden Treibmediums herbeigeführt wird.

Gemäß einer vorteilhaften Ausgestaltung weist das Laufrad radiale Kanäle aufweist, wobei die Kanäle vom Bereich der axialen Öffnung zum zweiten Seitenkanal verlaufen und wobei die radialen Kanäle die axiale Öffnung und den zweiten Seitenkanal fluidisch verbinden. Auf diese Weise lässt sich der Vorteil erzielen, dass ein Großteil der Druckenergie und kinetischen Energie des über das Dosierventil eingedüsten gasförmigen Mediums bzw. Treibstrahls, insbesondere des Treibmediums, in Rotationsenergie des Laufrads umgewandelt werden kann, wobei die Strömungsverluste des Treibstrahls mit dem zweiten Seitenkanal und/oder des Treibmediums mit einem radialen Kanal verringert werden können. Somit lässt sich der Wirkungsgrad der Fördereinrichtung und/oder des Seitenkanalverdichters erhöhen.

Gemäß einer besonders vorteilhaften Weiterbildung sind die radialen Kanäle als offene Rinnen ausgebildet sind, wobei die jeweilige Rinne in Richtung der Drehachse auf der dem Antrieb abgewandten Seite geöffnet ist. Auf diese Weise lässt sich der Vorteil erzielen, dass die die axiale Öffnung mit dem zweiten Seitenkanal verbindenden offenen Rinnen mittels eines einfachen Fertigungsverfahrens in das Laufrad eingebracht werden können. Des Weiteren kann aufgrund dieser erfindungsgemäßen Ausgestaltung des Förderaggregats das separate Bauteil Scheibe oder als Deckel, eingespart werden, wodurch die Materialkosten und/oder Bauteilkosten reduziert werden können.

Gemäß einer vorteilhaften Ausgestaltung sind die radialen Kanäle als geschlossene Kanäle ausgebildet, wobei die jeweiligen Kanäle mittels eines separaten Deckels derart geschlossen werden, dass die Kanäle in Richtung der Drehachse auf der dem Antrieb abgewandten Seite vom Deckel begrenzt werden. Auf diese Weise lässt sich der Vorteil erzielen, dass eine kompakte Bauform für die Verbindung der axialen Öffnung zum zweiten Seitenkanal herbeigeführt werden.

Gemäß einer vorteilhaften Weiterbildung der Fördereinrichtung wird das Treibmedium zumindest mittelbar über das Dosierventil in den zweiten Seitenkanal zudosiert wird und/oder in diesen einströmt, wobei der zweite Seitenkanal vom ersten Seitenkanal zumindest nahezu vollständig fluidisch getrennt ist und/oder nur im Bereich der Gas-Auslassöffnung fluidisch verbunden sind. Auf diese Weise kann sichergestellt werden, dass ein Großteil der kinetischen Energie des Treibmediums und des Treibstrahls zum Antreiben des Laufrads verwandt wird und dass diese kinetische Energie nicht zumindest zum Teil aufgrund von Strömungsverlusten und/oder Reibungsverlusten mit einem im ersten Seitenkanal befindlichen Rezirkulat verloren geht. Zudem findet ein mittels eines Druckaustauschs und/oder Impulsaustauschs zwischen dem Treibmedium und des im zweiten Seitenkanals befindlichen Mediums statt, wobei das Treibmedium einen höheren Druck und/oder eine höhere Geschwindigkeit zum im zweiten Seitenkanal befindlichen Mediums aufweist. Somit kann der Wirkungsgrad der Fördereinrichtung und/oder des Seitenkanalverdichters erhöht werden.

Gemäß einer besonders vorteilhaften Ausgestaltung der Fördereinrichtung wird das Laufrad, insbesondere je nach Betriebszustand einer Brennstoffzelle, entweder von dem Antrieb, der als ein Antriebsmotor ausgebildet sein kann, angetrieben wird oder zumindest mittelbar vom Treibstrahl aus dem mindestens den radialen Kanal angetrieben wird oder von den Elementen gleichzeitig angetrieben wird. Auf diese Weise kann der Antriebsmotor des Seitenkanalverdichters bei hohen Lastpunkten des Seitenkanalverdichters und/oder der Brennstoffzelle und/oder des Brennstoffzellensystems durch die Wirkung des Treibstrahls des Dosierventils unterstützt werden, wodurch der Antriebsmotor und/oder das Laufrad kompakter ausgeführt werden kann, wodurch der benötigte Bauraum und die Kosten der gesamten Fördereinrichtung reduziert werden können. Zudem kann ein besserer Wirkungsgrad der Fördereinrichtung erzielt werden, da die Fördereinrichtung effizienter bei den unterschiedlichen Betriebszuständen des Brennstoffzellensystems und/oder der Brennstoffzelle arbeiten kann.

Gemäß einer vorteilhaften Ausgestaltung der Fördereinrichtung verläuft der mindestens eine radiale Kanal schneckenförmig vom Inneren des Laufrads zur Wandung. Auf diese Weise kann sichergestellt werden, dass das Treibmedium möglichst beim Durchströmen des radialen Kanals oder der offenen Rinne zusätzlich durch eine Drehung des Laufrads in Kombination mit der Schneckenform beschleunigt wird. Zudem kann der Treibstrahl zumindest nahezu parallel zu einer Tangente der innenliegenden Wandung oder in einem geringen Winkel zu dieser aus dem Laufrad ausströmen, sich die Reibungsverluste verringern lassen. Weiterhin wird das Treibmedium beim Durchströmen aufgrund der längeren Kanallänge des radialen Kanals länger der Zentrifugalkraft aufgrund des sich drehenden Laufrads ausgesetzt, wobei eine weiter erhöhte Beschleunigung erzielt werden kann, die in einer erhöhten Einströmgeschwindigkeit des Treibmediums in den zweiten Seitenkanal resultiert. Auf diese Weise lässt sich der Wirkungsgrad der Fördereinrichtung und/oder des Seitenkanalverdichters erhöhen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Kurze Beschreibung der Zeichnung

Anhand der Zeichnung wird die Erfindung nachstehend eingehender beschrieben.

Es zeigt:
- Figur 1: eine schematische Schnittansicht einer erfindungsgemäßen Fördereinrichtung mit einem Rezirkulationsgebläse,
- Figur 2: eine schematische Schnittansicht eines Teils der Fördereinrichtung gemäß einem ersten Ausführungsbeispiel und einem zweiten Ausführungsbeispiel mit einem Dosierventil und einem Seitenkanalverdichter,
- Figur 3: eine in Figur 2 mit A-A bezeichnete Schnittansicht und/oder Draufsicht der Fördereinrichtung, des Seitenkanalverdichters und eines Laufrads gemäß einem ersten oder einem zweiten Ausführungsbeispiel,

### Beschreibung des Ausführungsbeispiels

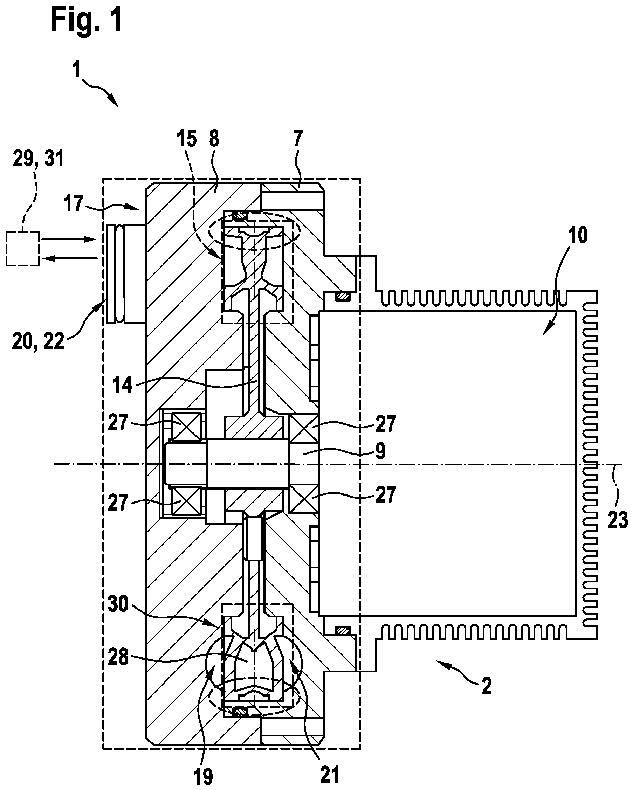

Der Darstellung gemäß **Fig.** 1 ist eine schematische Schnittansicht einer erfindungsgemäßen Fördereinrichtung 1 mit einem Seitenkanalverdichter 2.

Der Seitenkanalverdichter 2 weist ein in einem Gehäuse 17 umlaufendes Laufrad 14 auf, das auf einer Antriebswelle 9 befestigt ist und von einem Antrieb 10, der als ein Antriebsmotor 10 ausgebildet sein kann, in Rotation versetzt wird.

In einer beispielhaften Ausführungsform kann dabei das Laufrad 14 auf der Antriebswelle 9 befestigt sein. Alternativ kann der Antriebsmotor 10 als Axialfeldmotor 10 ausgeführt sein, der keiner Antriebswelle 9 bedarf.

Dabei ist in **Fig.** 1 gezeigt, dass die Fördereinrichtung 1 geeignet für ein Brennstoffzellen-System 31 zur Förderung und/oder Rezirkulation eines gasförmigen Mediums, insbesondere Wasserstoff. Die Fördereinrichtung 1 weist den Seitenkanalverdichter 2 auf, wobei die Fördereinrichtung 1 mittels eines Dosierventils 6 (gezeigt in **Fig**. 2) mit einem Treibstrahl 12 (gezeigt in **Fig**. 2) eines unter Druck stehenden gasförmigen Mediums zumindest teilweise angetrieben werden kann.

Dabei wird das unter Druck stehende gasförmige Medium der Fördereinrichtung 1 mittels des Dosierventils 6 zugeführt, wobei der Seitenkanalverdichter 2 das Laufrad 14 aufweist, das jeweils drehbar um eine Drehachse 23 angeordnet ist. Dabei ist ein Anodenausgang einer Brennstoffzelle 29 mit einer Gas-Einlassöffnung 20 der Fördereinrichtung 1 fluidisch verbunden. Weiterhin ist ein Anodeneingang der Brennstoffzelle 29 mit einer Gas-Auslassöffnung 22 der Fördereinrichtung 1 fluidisch verbunden.

Dabei dient ein elektrischer Antriebsmotor 10 als Drehantrieb 10 des Laufrades 14. Weiterhin weist die Fördereinrichtung 1 das Gehäuse 17 auf. Das Gehäuse 17 umfasst ein Gehäuse-Oberteil 7 und ein Gehäuse-Unterteil 8, die miteinander verbunden sind. Weiterhin kann das Laufrad 14 drehfest auf der Antriebswelle 9 angeordnet sein und wird vom Gehäuse-Oberteil 7 und dem Gehäuse-Unterteil 8 umschlossen. Des Weiteren bildet das Laufrad 14 eine sich außenseitig an eine Naben-Scheibe anschließende Förderzelle 28 aus. Diese Förderzellen 28 des Laufrads 14 verlaufen umlaufend um die Drehachse 23 in einem umlaufenden Verdichterraum 30 des Gehäuses 17. Weiterhin ist in **Fig**. 1 im Bereich der Förderzelle 28 die geschnittene Kontur eines jeweiligen Schaufelblattes 11 und/oder jeweiligen Schaufelblättern 11 zu sehen. Dieses jeweiligen Schaufelblätter 11 können eine V-förmige Kontur aufweisen, wobei die symmetrische V-förmige Kontur in Richtung der Drehachse 23 verläuft. Des Weiteren wird die jeweilige Förderzelle 28 in Rotationsrichtung des Laufrads 14 von zwei jeweiligen Schaufelblättern 11 begrenzt, wobei eine Anzahl der Schaufelblätter 11 umlaufend um die Drehachse 23 am Laufrad 14 radial zur Drehachse 23 angeordnet sind.

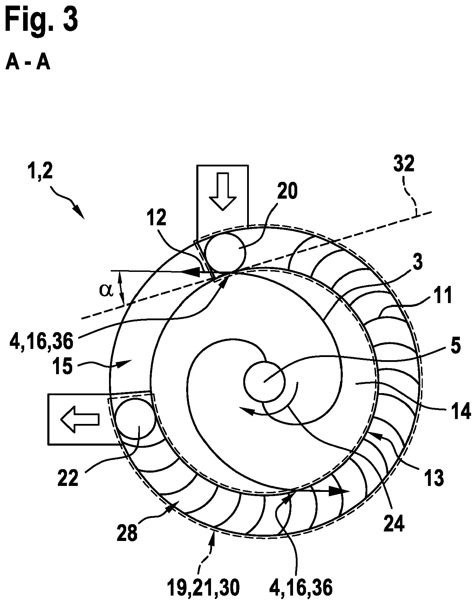

Wie in **Fig.** 1 gezeigt weist das Gehäuse 17, insbesondere das Gehäuse-Oberteil 7 und/oder das Gehäuse-Unterteil 8, im Bereich des Verdichterraums 30 mindestens einen umlaufenden Seitenkanal 19, 21 auf. Dabei verläuft der mindestens eine Seitenkanal 19, 21 derart im Gehäuse 17 in Richtung der Drehachse 23, dass dieser axial oder radial zur Förderzelle 28 einseitig oder beidseitig verläuft. Der mindestens eine Seitenkanal 19, 21 kann dabei zumindest in einem Teilbereich des Gehäuses 17 umlaufend um die Drehachse 23 verlaufen, wobei in dem Teilbereich, in dem der erste Seitenkanal 19 im Gehäuse 17 nicht ausgebildet ist, ein Unterbrecher-Bereich 15 im Gehäuse 17 ausgebildet sein kann (siehe **Fig.** 3).

In einer möglichen Ausführungsform ist die Antriebswelle 9 axial zur Drehachse 23 zumindest kardanisch mit dem Antriebsmotor 10 verbunden. Zudem befindet sich das mindestens eine Lager 27 am Außendurchmesser der Antriebswelle 9 axial im Bereich zwischen dem Gehäuse-Unterteil 8 und dem Laufrad 14.

Weiterhin bildet das Gehäuse 17, insbesondere das Gehäuse-Unterteil 8, die Gas-Einlassöffnung 20 und die Gas-Auslassöffnung 22 aus. Dabei sind die Gas-Einlassöffnung 20 und die Gas-Auslassöffnung 22, insbesondere über den ersten Seitenkanal 19 fluidisch miteinander verbunden.

Vom Antriebsmotor 10 wird in der ersten Ausführungsform ein Drehmoment über die Antriebswelle 9 auf das Laufrad 14 übertragen. In einer alternativen Ausführungsform kann der Antriebsmotor 10 als Axialfeldmotor 10 ausgeführt sein, und somit das Laufrad 14 direkt mittels eines Magnetfelds antreiben, ohne dass ein Drehmoment über die Antriebswelle 9 übertragen werden muss. Dabei wird das Laufrad 14 in Rotationsbewegung versetzt und die Förderzelle 28 bewegt sich in einer Rotationsbewegung umlaufend um die Drehachse 23 durch den Verdichterraum 30 im Gehäuse 17 in Richtung einer Drehrichtung 24 (siehe **Fig.** 3) des Laufrads 14. Dabei wird ein schon im Verdichterraum 30 befindliches gasförmiges Medium durch die Förderzelle 28 mitbewegt und dabei gefördert und/oder verdichtet. Zudem findet eine Bewegung des gasförmigen Mediums, insbesondere ein Strömungsaustausch, zwischen der Förderzelle 28 und dem ersten Seitenkanal 19 statt. Des Weiteren ist der Seitenkanalverdichter 2 über die Gas-Einlassöffnung 20 und die Gas-Auslassöffnung 22 mit dem Brennstoffzellen-System 31 verbunden, wobei das gasförmige Medium, bei dem es sich insbesondere um ein unverbrauchte Rezirkulationsmedium aus der Brennstoffzelle 29 handelt, über die Gas-Einlassöffnung 20 in den Verdichterraum 30 des Seitenkanalverdichters 2 ein und/oder wird dem Seitenkanalverdichter 2 zugeführt und/oder wird aus dem Bereich, der der Gas-Einlassöffnung 20 vorgelagert ist, angesaugt. Dabei wird das gasförmige Medium nach erfolgtem Durchlauf durch die Fördereinrichtung 1 und/oder den Seitenkanalverdichter 2 über die Gas-Auslassöffnung 22 des Seitenkanalverdichters 2 abgeleitet und strömt insbesondere über den Anodenausgang in die Brennstoffzelle 29. Zudem weisen die Fördereinrichtung 1 und/oder der Seitenkanalverdichter 2 ein Gehäuse 17 mit der am Gehäuse 17 ausgebildeten Gas-Einlassöffnung 20 und der Gas-Auslassöffnung 22 auf, die über den Verdichterraum 30, insbesondere den mindestens einen ersten Seitenkanal 19, fluidisch miteinander verbunden sind

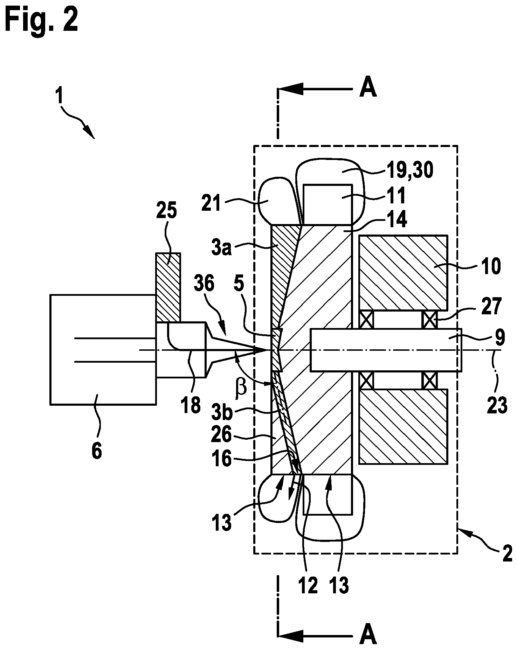

**Fig. 2** zeigt eine schematische Schnittansicht eines Teils der Fördereinrichtung 1 gemäß einem ersten Ausführungsbeispiel mit dem Dosierventil 6, dem Seitenkanalverdichter 2 und dem Antriebsmotor 10.

Dabei ist die Fördereinrichtung 1 zur Förderung und/oder Rezirkulation eines gasförmigen Mediums, insbesondere Wasserstoff, mit dem Seitenkanalverdichter 2 gezeigt. Die Fördereinrichtung 1 wird dabei mittels des Dosierventils 6 mit dem Treibstrahl 12 eines unter Druck stehenden gasförmigen Mediums zumindest teilweise angetrieben, wobei das unter Druck stehende gasförmige Medium der Fördereinrichtung 1 zumindest mittelbar mittels des Dosierventils 6 zugeführt wird und als Treibmedium vorliegt. Gemäß einer besonders vorteilhaften Weiterbildung der Fördereinrichtung 1 verläuft der mindestens eine radiale Kanal 3 orthogonal zur Drehachse 23. Auf diese Weise lässt sich der Vorteil erzielen, dass ein Großteil der Druckenergie und kinetischen Energie des über das Dosierventil 6 eingedüsten Treibstrahls 12, insbesondere des Treibmediums, in Rotationsenergie des Laufrads 14 umgewandelt werden kann, wobei die Strömungsverluste des Treibstrahls 12 mit dem zweiten Seitenkanal 21 und/oder des Treibmediums mit dem radialen Kanal 3 verringert werden können. Somit lässt sich der Wirkungsgrad der Fördereinrichtung 1 und/oder des Seitenkanalverdichters 2 erhöhen.

Des Weiteren ist in **Fig.** 2 gezeigt, dass die Fördereinrichtung 1 den umlaufend um die Drehachse 23 verlaufenden Verdichterraum 30 aufweist, der mindestens einen umlaufenden ersten Seitenkanal 19 aufweist, mit einem in dem Gehäuse 17 (gezeigt in **Fig.** 1) befindlichen Laufrad 14, das drehbar um die Drehachse 23 angeordnet ist und durch den Antrieb 10 angetrieben wird. Der Verdichterraum 30 und der erste Seitenkanal 19 verlaufen dabei zumindest annähernd ringförmig um die Drehachse 23. Der Seitenkanalverdichter 2 weist das Laufrad 14 auf, das an seinem Umfang im Bereich des Verdichterraums 30 angeordnete Schaufelblätter 11 aufweist. Dabei ist das Laufrad 14 mittels mindestens eines in mindestens eine radiale Öffnung 16 mündenden radialen Kanals 3 zumindest mittelbar mit dem Dosierventil 6 bzw. einem Tank 25 fluidisch verbunden. Das Treibmedium wird dabei aus dem radialen Kanal 3 in einen zweiten Seitenkanal 21 zudosiert und/oder strömt in diesen ein, wobei der zweite Seitenkanal 21 vom ersten Seitenkanal 19 zumindest nahezu vollständig fluidisch getrennt ist und/oder nur im Bereich der Gas-Auslassöffnung 22 fluidisch verbunden sind.

Die Zuführung des gasförmigen Mediums erfolgt dabei mittels des Dosierventils 6 zum Seitenkanalverdichter 2 über das Laufrad 14. Die Zuführung erfolgt zudem zumindest nahezu in Richtung der Drehachse 23 auf der dem Antrieb 10 abgewandten Seite des Laufrads 14, insbesondere über eine Düse 36 des Dosierventils 6 die über einen innenliegenden Kanal 18 mit dem Tank 25 verbunden ist. Dabei erfolgt die Zuführung des gasförmigen Mediums vom Dosierventil 6 in den Bereich einer axialen Öffnung 5 des Laufrads 14 erfolgt, wobei die axiale Öffnung 5 insbesondere scheibenförmig umlaufend um die Drehachse 23 verläuft.

**Fig.** 2 zeigt zudem, dass die radialen Kanäle 3 vom Bereich der axiale Öffnung 5 zum zweiten Seitenkanal 21 verlaufen und wobei die radialen Kanäle 3 die axiale Öffnung 5 und den zweiten Seitenkanal 21 fluidisch verbinden. Dabei wird in **Fig.** 2 oberhalb der Drehachse 23 ein erstes Ausführungsbeispiel und unterhalb der Drehachse 23 ein zweites Ausführungsbeispiel der Fördereinrichtung 1 gezeigt.: Gemäß einem ersten Ausführungsbeispiel sind die radialen Kanäle 3 der Fördereinrichtung 1 bzw. des Laufrads 14 des Seitenkanalverdichters 2, als offene Rinnen 3a ausgebildet, wobei die jeweilige Rinne 3a in Richtung der Drehachse 23 auf der dem Antrieb 10 abgewandten Seite geöffnet ist.

Gemäß einem zweiten Ausführungsbeispiel sind die radialen Kanäle 3 der Fördereinrichtung 1 als geschlossene Kanäle 3b ausgebildet, wobei die Kanäle 3b mittels eines separaten Deckels 26 derart geschlossen werden, dass diese in Richtung der Drehachse 23 auf der dem Antrieb 10 abgewandten Seite vom Deckel 26 begrenzt werden.

Weiterhin ist in **Fig.** 2 gezeigt, dass die Antriebswelle 9 mittels mindestens eines Lagers 27 gelagert sein kann, insbesondere im Gehäuse 17 und/oder am Antriebsmotor 10. Dabei verlaufen die Antriebswelle 9 und/oder das Laufrad 14 und/oder das mindestens eine Lagers 27 und/oder der Antriebsmotors 10 zumindest nahezu rotationssymmetrisch um die Drehachse 23. Das Laufrad 14 kann mittels eines Pressverbands auf der Antriebswelle 9 befestigt sein. Gemäß einer vorteilhaften Ausgestaltung der Fördereinrichtung 1 kann der mindestens eine radiale Kanal 3 in einem Winkel β zur Drehachse 23 verlaufen. Auf diese Weise kann das Einströmverhalten des Treibstrahls 12 bzw. des Treibmediums in den zweiten Seitenkanal 21 verbessert werden, insbesondere wenn der zweite Seitenkanal 21 einen vom ersten Seitenkanal 19 weggeneigten Strömungsquerschnitt aufweist.

In einer weiteren beispielhaften Ausführungsform der Fördereinrichtung 1 sind die beiden Seitenkanäle 19, 21 nur über einen kleinen Teil, insbesondere von weniger als 50% der in Drehrichtung 24 verlaufenden Strecke des Verdichterraums 30, zumindest nahezu vollständig fluidisch voneinander getrennt. Somit sind die beiden Seitenkanäle 19, 21 im restlichen der Gasauslassöffnung 22 vorgelagerten Verdichterraum 30, fluidisch miteinander verbunden, wobei dies Strecke mindestens 50% der die Drehachse 23 umlaufenden Strecke der Gesamtstrecke des Verdichterraums 30 beträgt. Auf diese Weise kann eine verbesserte Vermischung des Treibmediums mit dem Rezirkulats erfolgen, wobei auf diese Weise insbesondere ein Saugstrahleffekt entsteht indem das Treibmedium mit einer höheren Strömungsgeschwindigkeit auf das Rezirkulat trifft, das mit einer geringeren Strömungsgeschwindigkeit im Verdichterraum 30 strömt. Dabei findet ein Impulsübertrag statt, wodurch ein Saugstrahleffekt entsteht, nicht unähnlich dem Effekt in einer Strahlpumpe.

In einer beispielhaften Ausführungsform der Fördereinrichtung 1 befinden sich im Gehäuse 17 der Fördereinrichtung 1 die Elemente Dosierventil 6 und Seitenkanalverdichter 2 mit dem Antriebsmotor 10, wobei sich insbesondere die Strömungskonturen des Dosierventils 6 und des Seitenkanalverdichters 2 und der Kanäle 3, 5 befinden, die diese beiden Elemente 2, 6 verbinden. Somit werden keine separaten Gehäuse jeweils für die Elemente Seitenkanalverdichter 2 und Dosierventil 6 benötigt, sondern es kann das gemeinsames Gehäuse 17 für alle Elemente verwendet werden.

In **Fig.** 2 ist gezeigt, dass das Treibmedium, welches insbesondere unter einem hohen Druck steht, aus dem Tank 25 in den innenliegenden Kanal 18 einer Düse 36 einströmt. Dem innenliegenden Kanal 18 wird dabei über das Dosierventil 6 das Treibmedium aus dem Tank 25 zu dosiert. Vom innenliegenden Kanal 18 strömt das Treibmedium weiter in einer zumindest nahezu parallel zur Drehachse 23 verlaufenden Strömungsrichtung und wird über eine Düse 36 des Dosierventils 6 in die axiale Öffnung 5 des Laufrads 14 eingedüst. Dabei verläuft der mindestens eine radiale Kanal 3 orthogonal zur Drehachse 23. In diesem Bereich der axialen Öffnung 5 wird das gasförmige Medium, bei dem es sich insbesondere um ein Treibmedium handelt, derart abgelenkt, dass es in einem Winkel β und/oder zumindest nahezu orthogonal zur Drehachse 23 aus dem Bereich der axialen Öffnung 5 zum radialen Kanal 3 strömt und in diese einströmt. Vom radialen Kanal 3 strömt das Treibmedium über die jeweilige radiale Öffnung 16 in den zweiten Seitenkanal 21. Dabei weist das Laufrad 14 zumindest eine radiale Öffnung 16 an einer innenliegenden Wandung 13 auf, über die das Laufrad 14 mittels des Treibmediums angetrieben wird. Dabei wird das Treibmedium zumindest mittelbar über das Dosierventil 6 in den zweiten Seitenkanal 21 zudosiert und/oder strömt in diesen ein, wobei der zweite Seitenkanal 21 vom ersten Seitenkanal 19 zumindest nahezu vollständig fluidisch getrennt ist und/oder nur im Bereich der Gas-Auslassöffnung 22 fluidisch verbunden sind.

**Fig.** 2 zeigt zudem, dass der separate Deckel 26 als eine Scheibe 26 ausgebildet sein kann, wobei diese Scheibe 26 mittels eines Montageschrittes mit dem Laufrad 14 verbunden wird. Mittels dieses Deckels 26 ist eine Einbringung der komplexen Struktur des mindestens einen radialen Kanals 3 erst möglich, der insbesondere Schneckenförmig von der Drehachse 23 weg verläuft (dargestellt in **Fig.** 3).

In **Fig.** 3 ist eine in **Fig.** 2 mit A-A bezeichnete Schnittansicht und/oder Draufsicht der Fördereinrichtung 1, des Seitenkanalverdichters 2 und des Laufrads 14 gemäß einem ersten oder einem zweiten Ausführungsbeispiel. Das Laufrad 14 weist dabei an seinem Umfang im Bereich des Verdichterraums 30 angeordnete Schaufelblätter 11 auf. Weiterhin ist gezeigt, dass das Gehäuse 17 die Gas-Einlassöffnung 20 und die Gas-Auslassöffnung 22 aufweist, die über den Verdichterraum 30, insbesondere den mindestens einen ersten Seitenkanal 19, fluidisch miteinander verbunden sind. Dem Verdichterraum 30 wird dabei aus dem Anodenausgang der Brennstoffzelle 29 über die Gas-Einlassöffnung 20 das Rezirkulat zugeführt. Der Seitenkanalverdichter 2 fördert und/oder verdichtet das Rezirkulat im jeweiligen Seitenkanal 19 Von dort gelangt das verdichtete Rezirkulat zur Gas-Auslassöffnung 22 und von dort zurück zur Brennstoffzelle 29, insbesondere über den Anodeneingang. Zwischen der Gas-Einlassöffnung 20 und der Gas-Auslassöffnung 22 befindet sich der Unterbrecherbereich 15 um einen Druckabfall und/oder einen Druckausgleich von der Gas-Auslassöffnung 22 zur Gas-Einlassöffnung 20, insbesondere in der Drehrichtung 24, zu verhindern. Dabei verläuft der Unterbrecherbereich 15 zumindest teilweise umlaufend um die Drehachse 23 und unterbricht den jeweiligen Seitenkanal 19, 21 zumindest fluidisch.

Weiterhin bildet das Laufrad 14 an seiner der Drehachse 23 abgewandten Seite die Wandung 13 aus, wobei das Laufrad 14 zumindest eine radiale Öffnung 16 und/oder eine Bohrung 4 an seiner innenliegenden Wandung 13 aufweist, über die das Laufrad 14 mittels eines Treibmediums bzw. des Treibstrahls 12 angetrieben wird, insbesondere im Bereich des zweiten Seitenkanals 21. Der Treibstrahl 12 verläuft dabei in einem Winkel α von zumindest nahezu 0° bis 60° zu einer Tangente 32 der innenliegenden Wandung 13.

Zudem ist gezeigt dabei der radiale Kanal 3 die Bohrung 4 im einem Verdichterraum 30 zugewandten Endbereich ausbildet, insbesondere jedoch nur über einen Teil seiner Gesamtlänge. Der mindestens eine radiale Kanal 3 verläuft dabei schneckenförmig vom Inneren des Laufrads 14 zur Wandung 13.

Der Treibstrahl 12 des Dosierventils 6, wobei es sich insbesondere um ein Treibmedium handelt, wird dabei unter hohem Druck und mit einer hohen Geschwindigkeit in den zweiten Seitenkanal 21 eingebracht. Dabei wird derart eine Kraft auf das Laufrad 14 ausgeübt, dass sich dieses aufgrund des Hebelarms in Bewegung, insbesondere eine Rotationsbewegung, setzt und/oder in Bewegung gehalten wird. Dabei rotiert das Laufrad 14 in der Drehrichtung 24. Der von dem Tank 25, insbesondere einem Hochdrucktank 25, durch das Dosierventil 6 in den Seitenkanalverdichter 2 strömende Wasserstoff, der im Tank 25 eine niedrigere Temperatur aufweist, als die Betriebstemperatur des Seitenkanalverdichters 2, kann somit als einströmender Wasserstoff, bei dem es sich insbesondere um ein Treibmedium handelt, zum Kühlen des Seitenkanalverdichters 2 verwendet werden. Dies verringert die Ausfallwahrscheinlichkeit der Fördereinrichtung 1 aufgrund von Erhitzen durch Übertemperatur.

In **Fig.** 3 ist weiterhin gezeigt, dass das Laufrad 14, je nach Betriebszustand der Brennstoffzelle 29, entweder von dem Antriebsmotor 10 angetrieben wird oder zumindest mittelbar vom Treibstrahl 12 des Dosierventil 6 angetrieben oder von den Elementen 6, 10, 12 gleichzeitig angetrieben. Die im zu dosierten Wasserstoff enthaltene Strömungsenergie wird dazu verwendet, das Laufrad 14 des Seitenkanalverdichters 2 mit anzutreiben. Dabei strömt der Treibstrahl 12 in den Bereich des zweiten Seitenkanals 21 ein und treibt auf diese Weise das Laufrad 14 an. Der Wasserstoff wird axial dem Laufrad 14 zugeführt, radial nach außen geführt, sodass der Treibstrahl 12 in Umfangsrichtung das Laufrad 14 verlässt und somit ein Drehmoment auf das Laufrad 14 erzeugt. Damit keine Unwucht entsteht, sind die radiale Öffnungen 16 und/oder radialen Kanäle 3 gleichmäßig am Umfang verteilt.

In **Fig.** 3 ist darüber hinaus gezeigt, dass sich jeweils die Förderzelle 28 zwischen zwei benachbarten Schaufelblättern 11 befindet. Weiterhin weisen die Schaufelblätter 11 eine symmetrische V-förmige Kontur auf, wobei die symmetrische V-förmige Kontur in Richtung der Drehachse 23 verläuft und wobei die geöffnete Seite der symmetrischen V-förmigen Kontur der Schaufelblätter 11 in der Drehrichtung 24 des Laufrads 14 gerichtet sind.

## Patentansprüche

1. Fördereinrichtung (1) für ein Brennstoffzellen-System (31) zur Förderung und/oder Rezirkulation eines gasförmigen Mediums, insbesondere Wasserstoff, mit einem Dosierventil (6), mit einem Seitenkanalverdichter (2), der ein Gehäuse (17) und einen Antrieb (10) aufweist, mit einem in dem Gehäuse (17) umlaufend um eine Drehachse (23) verlaufenden Verdichterraum (30), der mindestens einen umlaufenden ersten Seitenkanal (19) aufweist, mit einem in dem Gehäuse (17) befindlichen Laufrad (14), das drehbar um die Drehachse (23) angeordnet ist und durch den Antrieb (10) angetrieben wird, mit einer am Gehäuse (17) ausgebildeten Gas-Einlassöffnung (20) und einer Gas-Auslassöffnung (22), die über den Verdichterraum (30), insbesondere den ersten Seitenkanal (19), fluidisch miteinander verbunden sind, wobei die Fördereinrichtung (1) mittels des Dosierventils (6) mit einem Treibstrahl (12) eines unter Druck stehenden gasförmigen Mediums zumindest teilweise angetrieben wird, wobei das unter Druck stehende gasförmige Medium dem Verdichterraum (30) zumindest mittelbar mittels des Dosierventils (6) zugeführt wird, und wobei die Zuführung des gasförmigen Mediums mittels des Dosierventils (6) zum Seitenkanalverdichter (2) über das Laufrad (14) erfolgt, **dadurch gekennzeichnet, dass** diese Zuführung zumindest nahezu in Richtung der Drehachse (23) auf der dem Antrieb (10) abgewandten Seite des Laufrads (14) erfolgt.

2. Fördereinrichtung (1) gemäß Anspruch 1, **dadurch gekennzeichnet, dass** die Zuführung des gasförmigen Mediums vom Dosierventil (6) in den Bereich einer axialen Öffnung (5) des Laufrads (14) erfolgt, wobei die axiale Öffnung (5) insbesondere scheibenförmig umlaufend um die Drehachse (23) verläuft.

3. Fördereinrichtung (1) gemäß Anspruch 1 oder 2, **dadurch gekennzeichnet, dass** das Laufrad (14) an seiner der Drehachse (23) abgewandten Seite eine Wandung (13) ausbildet, wobei das Laufrad (14) mindestens eine radiale Öffnung (16) an seiner innenliegenden Wandung (13) aufweist, über die das Laufrad (14) mittels des Treibstrahls (12) bzw. Treibmediums angetrieben wird, insbesondere im Bereich eines zweiten Seitenkanals (21) des Verdichterraums (30).

4. Fördereinrichtung (1) gemäß Anspruch 3, **dadurch gekennzeichnet, dass** das Laufrad (14) radiale Kanäle (3) aufweist, wobei die Kanäle (3) vom Bereich der radialen Öffnung (16) zum zweiten Seitenkanal (21) verlaufen und wobei die radialen Kanäle (3) die radiale Öffnung (16) und den zweiten Seitenkanal (21) fluidisch verbinden.

5. Fördereinrichtung (1) gemäß Anspruch 4, **dadurch gekennzeichnet, dass** die radialen Kanäle (3) als offene Rinnen (3a) ausgebildet sind, wobei die jeweilige Rinne (3a) in Richtung der Drehachse (23) auf der dem Antrieb (10) abgewandten Seite geöffnet ist.

6. Fördereinrichtung (1) gemäß Anspruch 4, **dadurch gekennzeichnet, dass** die radialen Kanäle (3) als geschlossene Kanäle (3b) ausgebildet sind, wobei die jeweiligen Kanäle (3b) mittels eines separaten Deckels (26) derart geschlossen werden, dass die Kanäle (3b) in Richtung der Drehachse (23) auf der dem Antrieb (10) abgewandten Seite vom Deckel (26) begrenzt werden.

7. Fördereinrichtung (1) gemäß einem der vorrangegangen Ansprüche,
**dadurch gekennzeichnet, dass** der Treibstrahl (12) bzw. das Treibmedium zumindest mittelbar
über das Dosierventil (6) in einen zweiten Seitenkanal (21) des Verdichterraums (30) zudosiert
wird und/oder in diesen einströmt, wobei der zweite Seitenkanal (21) vom ersten Seitenkanal (19) zumindest nahezu vollständig fluidisch getrennt ist und/oder nur im Bereich der Gas-Auslassöffnung (22) fluidisch verbunden sind.

8. Fördereinrichtung (1) gemäß Anspruch 4, **dadurch gekennzeichnet, dass** das Laufrad (14), insbesondere je nach Betriebszustand einer Brennstoffzelle (29), entweder von dem Antrieb (10), der insbesondere als ein Antriebsmotor 10 ausgebildet ist, angetrieben wird oder zumindest mittelbar vom Treibstrahl (12) aus dem mindestens einen radialen Kanal (3) angetrieben wird oder von den Elementen (10, 12, 6) gleichzeitig angetrieben wird.

9. Fördereinrichtung (1) gemäß Anspruch 4, **dadurch gekennzeichnet, dass** der mindestens eine radiale Kanal (3a, b) schneckenförmig vom Inneren des Laufrads (14) zur Wandung (13) verläuft.

10. Verwendung der Fördereinrichtung (1) gemäß einem der Ansprüche 1 bis 9 in einem Brennstoffzellen-System (31).

## Claims

1. Conveying device (1) for a fuel-cell system (31) for conveying and/or recirculating a gaseous medium, in particular hydrogen, having a dosing valve (6), having a side-channel compressor (2), which has a housing (17) and a drive (10),
having a compressor chamber (30), which extends in the housing (17) so as to run around an axis of rotation (23) and has at least one first side channel (19) that runs around, having an impeller (14), which is situated in the housing (17) and is arranged so as to be rotatable about the axis of rotation (23) and is driven by the drive (10),
having a gas inlet opening (20), formed on the housing (17), and a gas outlet opening (22), which are connected fluidically to one another via the compressor chamber (30), in particular the first side channel (19), wherein, by means of the dosing valve (6), the conveying device (1) is driven at least partially by a motive jet (12) of a pressurized gaseous medium, wherein the pressurized gaseous medium is fed to the compressor chamber (30) at least indirectly by means of the dosing valve (6), and wherein
the gaseous medium is fed by means of the dosing valve (6) to the side-channel compressor (2) via the impeller (14), **characterized in that** this feeding takes place at least almost in the direction of the axis of rotation (23) on that side of the impeller (14) which is directed away from the drive (10).

2. Conveying device (1) according to Claim 1, **characterized in that** the gaseous medium is fed from the dosing valve (6) into the region of an axial opening (5) of the impeller (14), wherein the axial opening (5) extends around the axis of rotation (23) in particular so as to run around in the form of a disc.

3. Conveying device (1) according to Claim 1 or 2, **characterized in that** the impeller (14) forms a wall (13) on its side directed away from the axis of rotation (23), wherein the impeller (14) has at least one radial opening (16) on its inner wall (13), via which radial opening the impeller (14) is driven by means of the motive jet (12) or motive medium, in particular in the region of a second side channel (21) of the compressor chamber (30).

4. Conveying device (1) according to Claim 3, **characterized in that** the impeller (14) has radial channels (3), wherein the channels (3) extend from the region of the radial opening (16) to the second side channel (21), and wherein the radial channels (3) fluidically connect the radial opening (16) and the second side channel (21).

5. Conveying device (1) according to Claim 4, **characterized in that** the radial channels (3) are in the form of open grooves (3a), wherein the respective groove (3a) is open on the side directed away from the drive (10) in the direction of the axis of rotation (23).

6. Conveying device (1) according to Claim 4, **characterized in that** the radial channels (3) are in the form of closed channels (3a), wherein the respective channels (3a) are closed by means of a separate cover (26) in such a way that the channels (3b) are limited by the cover (26) on the side directed away from the drive (10) in the direction of the axis of rotation (23).

7. Conveying device (1) according to one of the preceding claims, **characterized in that** the motive jet (12) or the motive medium, at least indirectly, is dosed via the dosing valve (6) into a second side channel (21) of the compressor chamber (30) and/or flows into it, wherein the second side channel (21) is at least almost completely separated fluidically from the first side channel (19) and/or is connected fluidically thereto only in the region of the gas outlet opening (22).

8. Conveying device (1) according to Claim 4, **characterized in that** the impeller (14), in particular according to operating state of a fuel cell (29), is driven by the drive (10), which is in particular in the form of a drive motor (10), or is driven at least indirectly by the motive jet (12) from the at least one radial channel (3) or is driven simultaneously by the elements (10, 12, 6).

9. Conveying device (1) according to Claim 4, **characterized in that** the at least one radial channel (3a, b) extends in a helical manner from the interior of the impeller (14) to the wall (13).

10. Use of the conveying device (1) according to one of Claims 1 to 9 in a fuel-cell system (31).

## Revendications

1. Dispositif d'acheminement (1) pour un système de piles à combustible (31) pour l'acheminement et/ou la recirculation d'un milieu gazeux, en particulier de l'hydrogène, avec une vanne de dosage (6), avec un compresseur (2) à canal latéral, qui présente un boîtier (17) et un système d'entraînement (10), comprenant une chambre de compression (30) s'étendant circonférentiellement autour d'un axe de rotation (23) dans le boîtier (17), qui présente au moins un premier canal latéral (19) circonférentiel, avec une roue (14) se trouvant dans le boîtier (17), qui est agencée de façon rotative autour de l'axe de rotation (23) et qui est entraînée par le système d'entraînement (10), comprenant une ouverture (20) d'entrée de gaz formée sur le boîtier (17) et une ouverture (22) de sortie de gaz, qui sont reliées fluidiquement l'une à l'autre par l'intermédiaire de la chambre de compression (30), en particulier du premier canal latéral (19), le dispositif d'acheminement (1) étant entraîné au moins partiellement au moyen de la vanne de dosage (6) avec un jet propulseur (12) d'un milieu gazeux sous pression, le milieu gazeux sous pression étant amené à la chambre de compression (30) au moins indirectement au moyen de la vanne de dosage (6), et
l'amenée du milieu gazeux au moyen de la vanne de dosage (6) au compresseur (2) à canal latéral s'effectuant par l'intermédiaire de la roue (14), **caractérisé en ce que** cette amenée s'effectue au moins sensiblement dans la direction de l'axe de rotation (23) sur le côté de la roue (14) opposé au système d'entraînement (10).

2. Dispositif d'acheminement (1) selon la revendication 1, **caractérisé en ce que** l'amenée du milieu gazeux depuis la vanne de dosage (6) s'effectue dans la zone d'une ouverture axiale (5) de la roue (14), l'ouverture axiale (5) s'étendant notamment en forme de disque sur le pourtour de l'axe de rotation (23).

3. Dispositif d'acheminement (1) selon la revendication 1 ou la revendication 2, **caractérisé en ce que** la roue (14) forme une paroi (13) sur son côté opposé à l'axe de rotation (23), la roue (14) présentant au moins une ouverture radiale (16) sur sa paroi intérieure (13), par laquelle la roue (14) est entraînée au moyen du jet propulseur (12) ou du fluide propulseur, notamment dans la zone d'un deuxième canal latéral (21) de la chambre de compression (30).

4. Dispositif d'acheminement (1) selon la revendication 3, **caractérisé en ce que** la roue (14) présente des canaux radiaux (3), les canaux (3) s'étendant depuis la zone de l'ouverture radiale (16) jusqu'au deuxième canal latéral (21) et les canaux radiaux (3) reliant de manière fluidique l'ouverture radiale (16) et le deuxième canal latéral (21).

5. Dispositif d'acheminement (1) selon la revendication 4, **caractérisé en ce que** les canaux radiaux (3) sont réalisés sous forme de goulottes ouvertes (3a), la goulotte respective (3a) étant ouverte en direction de l'axe de rotation (23) sur le côté opposé au système d'entraînement (10).

6. Dispositif d'acheminement (1) selon la revendication 4, **caractérisé en ce que** les canaux radiaux (3) sont réalisés sous forme de canaux fermés (3b), les canaux respectifs (3b) étant fermés au moyen d'un couvercle séparé (26) de telle sorte que les canaux (3b) sont limités par le couvercle (26) dans la direction de l'axe de rotation (23) sur le côté opposé au système d'entraînement (10).

7. Dispositif d'acheminement (1) selon l'une des revendications précédentes, **caractérisé en ce que** le jet propulseur (12) ou le fluide propulseur est dosé au moins indirectement par la vanne de dosage (6) dans un deuxième canal latéral (21) de la chambre de compression (30) et/ou s'écoule dans celui-ci, le deuxième canal latéral (21) étant au moins sensiblement entièrement séparé fluidiquement du premier canal latéral (19) et/ou n'étant relié fluidiquement que dans la zone de l'ouverture (22) de sortie de gaz.

8. Dispositif d'acheminement (1) selon la revendication 4, **caractérisé en ce que** la roue (14), en particulier selon l'état de fonctionnement d'une pile à combustible (29), est soit entraînée par le système d'entraînement (10), qui est notamment réalisé sous la forme d'un moteur d'entraînement (10), soit entraînée au moins indirectement par le jet propulseur (12) provenant dudit au moins un canal radial (3), soit entraînée simultanément par les éléments (10, 12, 6).

9. Dispositif d'acheminement (1) selon la revendication 4, **caractérisé en ce que** ledit au moins un canal radial (3a, b) s'étend en forme de vis sans fin depuis l'intérieur de la roue (14) vers la paroi (13).

10. Utilisation du dispositif d'acheminement (1) selon l'une des revendications 1 à 9 dans un système de pile à combustible (31).
